# EUROPEAN PATENT SPECIFICATION

(11) **EP 1 423 779 B1**
(45) Date of publication and mention of the grant of the patent: **11.04.2012**
(21) Application number: 02780279.2
(22) Date of filing: 06.09.2002
(51) Int. Cl.: G06F 3/00, G06F 13/00, H04N 5/445, H04N 5/91, G09G 5/00, G06F 3/033, H04N 5/00, H04N 7/16

(54) **METHOD AND APPARATUS FOR ADAPTIVELY STORING PROGRAM GUIDE DATA**
VERFAHREN UND VORRICHTUNG ZUM ADAPTIVEN SPEICHERN VON PROGRAMMANLEITUNGSDATEN
PROCEDE ET DISPOSITIF DE STOCKAGE ADAPTATIF DES DONNEES DE GUIDE DES PROGRAMMES

(30) Priority: 07.09.2001 US 318057 P; 06.03.2002 US 91816
(43) Date of publication of application: 02.06.2004
(73) Proprietor: Thomson Licensing, 92130 Issy-les-Moulineaux (FR)
(72) Inventor: KLOPFENSTEIN, Scott, Edward, Fishers, IN 46038 (US)
(74) Representative: Frese, Beate
(86) International application number: PCT/US2002/028490
(87) International publication number: WO 2003/023588

(56) References cited:
- WO-A-00/56066
- US-A- 5 694 176
- US-B1- 6 246 442

## Description

### FIELD OF THE INVENTION

This invention relates to electronic program guides for televisions and receivers.

### BACKGROUND OF THE INVENTION

Television viewers, especially associated with premium cable and satellite programming services, often use an electronic program guide to select a program for viewing from a service provider or broadcast center. For example, the viewer may use the program guide to order a pay-per-view selection from a movie provider. Similarly, the viewer may select a particular category of programming, such as "Sports," and select a program for viewing from those offered in that category. Such program guides are generally provided using a video receiver coupled to a display device, e.g., a television set. Examples of a typical video receiver include a set top terminal, a Digital Broadcast Satellite (DBS) receiver, an Integrated Receiver-Decoder (IRD), and other types of television receivers.

To maintain a current program schedule in the program guide, the receiver periodically receives program guide information for a program schedule. Current specifications for an Advanced Program Guide (APG) require the storage of all received program guide information within a memory of the video receiver. Such memory is typically limited in size.

US 6,246,442 concerns an information display apparatus for displaying information arranged in each of a plurality of cells which are set along each display axis.

WO 00/56066 discloses EPG services that are provided, which enable a device such as a computer, a set top box or the like to collect EPG data from multiple EPG data providers or sources.

EP 1 091 585 A2 discloses a user preference information data structure which is capable of classifying and setting user's preference information regarding multimedia contents with multiple items to thereby provide users with user's request-based whole or partial multi-media information, and a method for providing multi-media information by using the user preference information data structure.

### SUMMARY OF THE INVENTION

Method and apparatus suitable for use within a receiver for storing program guide information, wherein user interaction with a graphical object is used to determine the level of program information to be stored and the schedule length for the stored program guide information. According to the invention, a method according to claim 1 and an apparatus according to claim 13 are provided.

### BRIEF DESCRIPTION OF THE DRAWINGS

The teachings of the present invention can be readily understood by considering the following detailed description in conjunction with the accompanying drawings, in which:
FIG. 1 depicts a high level block diagram of a broadcast system;
FIG. 2 depicts a block diagram of a receiver suitable for use in the system of FIG. 1;
FIG. 3 depicts exemplary program guide screen imagery;
FIG. 4 depicts an embodiment of a program guide database;
FIG. 5 depicts an interface for controlling an amount of program guide content in a program guide;
FIG. 6 depicts different schedule lengths of a program guide based on the storage of extended program information; and
FIG. 7 depicts a flow diagram of a method for allocating a memory in a receiver.

To facilitate understanding, identical reference numerals have been used, where possible, to designate identical elements that are common to the figures.

### DETAILED DESCRIPTION

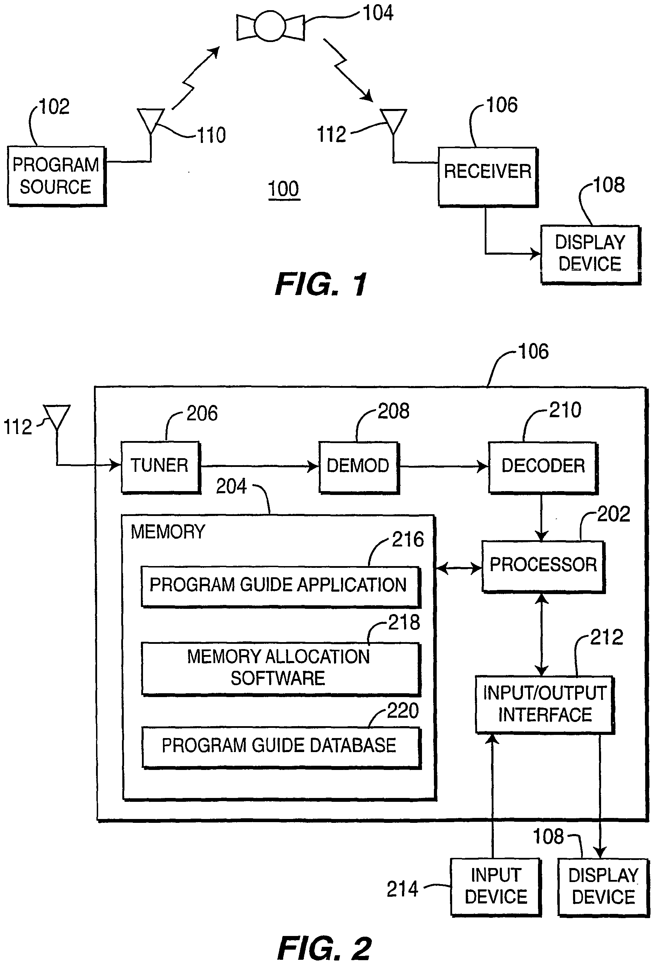

FIG. 1 depicts a high level block diagram of a broadcast system 100 for providing a program guide to a viewer of a television receiver set top terminal (STT) or other receiver. The system 100 of FIG. 1 comprises a program source 102, a satellite 104, a receiver 106 and a display device 108. Although one program source 102, one satellite 104 and one television receiver 106 is depicted in FIG. 1, the system 100 may comprise multiple program sources 102, multiple satellites 104 and multiple receivers 106. Additionally, the video broadcast system 100 is not limited to satellite transmission of video signals. For example, the system 100 may implement terrestrial stations to broadcast video signals.

The program source 102 broadcasts one or more video, audio, audiovisual and/or data signals via an antenna 110. In the case of a program comprising video, audio or audiovisual signals, the program is broadcast according to a program schedule. The program schedule defines the time and transmission channel used to broadcast the program for one or more geographic viewing areas. In one embodiment, the signals may comprise a program in the form of an MPEG-formatted data stream. The program may comprise a television program, a movie, a live broadcast, an advertisement, or some other form of audiovisual signal.

The satellite 104 receives the signals from the signal source 102 and rebroadcasts the signals to a predefined geographical viewing area. Additionally, the satellite 104 may receive a request from a video receiver 106 to broadcast "program guide information." In one embodiment, the program guide information may comprise Advanced Program Guide (APG) information.

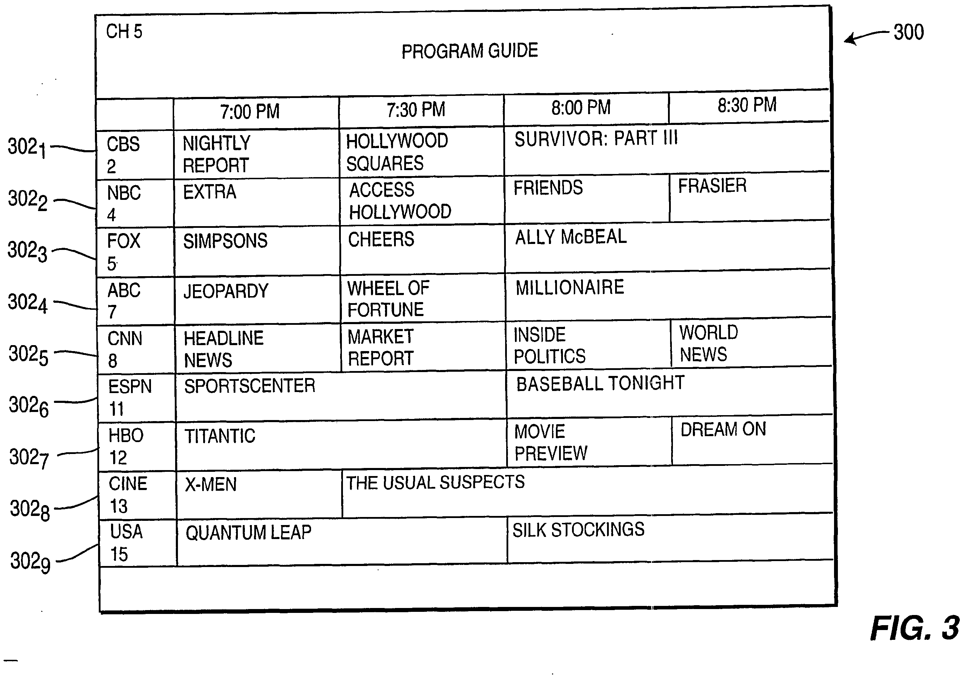

The receiver 106 receives the program guide information via an antenna 112 and stores the received information in a memory. The receiver 106 uses the program guide information to provide a program guide on a display device or some other form of output device. The program guide contains a listing of programs scheduled for broadcast over each channel accessible by the receiver 106. Exemplary program guide display imagery is described below with respect to FIG. 3.

Programs are scheduled for broadcast in accordance to a program schedule of a predetermined time frame or schedule length. The program guide displays only a current portion of the program schedule. The remainder of the program schedule is retained as program guide information stored in the memory of the receiver. The remainder portion of the program schedule is that portion of program guide scheduled for display in the future. As such, to maintain a current program guide, the receiver 106 must periodically obtain program guide information.

A viewer of the program guide may select a program displayed thereon. Once this occurs, the receiver 106 tunes to the satellite 104 (or satellite transponder/channel) broadcasting the selected program. The program is then received at the receiver 106 and provided to the display device 108. The receiver 106 is further described below with respect to FIG. 2.

FIG. 2 depicts a block diagram of the receiver 106 in the video system 100 of FIG. 1. In one embodiment, the video receiver 106 comprises a set top terminal (STT) or television receiver. The receiver 106 of FIG. 2 comprises a processor 202, a memory 204, a tuner 206, a demodulator 208 and a decoder 210. The receiver 106 may also comprise an input/output interface 212 and various support circuits (not shown).

The tuner 206 receives a plurality of signals from the satellite 104 and selects the appropriate signal or channel of interest. The demodulator 208 demodulates the selected signal. Common forms of demodulation include QAM (Quadrature Amplitude Modulation), QPSK (Quadrature Phase Shift Keying), and the like. The decoder 210 decodes program stream or program guide information within the demodulated signal. The decoder 210 may perform error correction such as forward error correction (FEC) as known to those skilled in the art.

The memory 204 stores software and data structures for the operation of the receiver 106. In one embodiment, the memory 204 stores a program guide application 216, memory allocation software (application) 218 and a program guide database 220. The memory 204 may comprise a combination of memory devices including random access memory (RAM), nonvolatile or backup memory (e.g., programmable or flash memories, read only memories (ROM), and the like).

The program guide application 216 comprises software programs having instructions which, when executed by the processor 202, provide program guide functionality in the television system 100. In one embodiment, the program guide application 216 may include a software program operative to monitor viewing habits of a user or viewer. The viewing habits or history may include a history of program selections or a history of selecting a particular genre of program, e.g., sports, romance, comedy, drama, and the like. The program guide application 216 then uses the viewing habits to suggest or estimate programs or the types of programs that the viewer is likely to watch or not likely to watch.

The memory allocation software 218 comprises a software program with instructions to allocate the storage of program guide information in the memory 204.

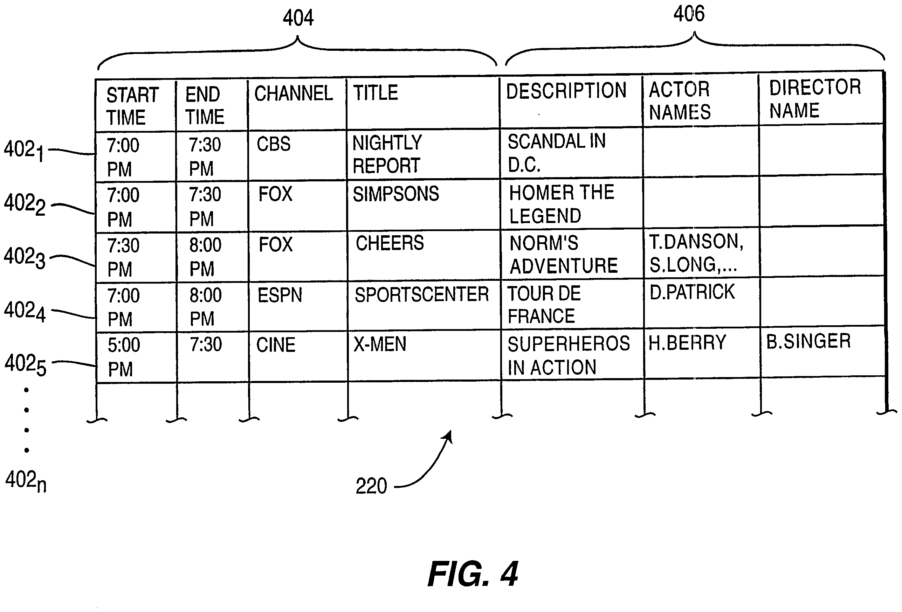

The program guide database 220 contains program guide information relating to channels, schedules and programs in the program schedule. One embodiment of the program guide database 220 is further described with respect to FIG. 4. Alternatively, the program guide database 220 comprises program objects for each program to be presented in the program guide. A program object represents a unit of information for a program. Each program has associated with it at least one program object providing the basic program information for the program. One or more additional program objects containing extended program information may also be associated with the program. It will be appreciated by those skilled in the art that a single object may be associated with each program, where the single object includes basic program information and, optionally, extended program information.

The processor 202 executes instructions contained in the program guide application 216 to enable the receiver 106 to provide a program guide function and other functionality as described herein. Additionally, the processor 202 executes instructions contained in the memory allocation software 218 to enable the receiver 106 to implement various embodiments of the present invention.

The input/output interface 212 comprises controllers used to couple the processor 202 to the input device 214 and the display device 108. The input/output interface 212 enables the processor 202 to receive commands from the input device 214 and to provide the program guide and the selected program to the display device 108. The interface 212 may comprise, for example, an NTSC, PAL, SECAM or HDTV presentation device. The input device 214 may comprise any device utilized to provide input to the receiver 102, e.g., to access program information for a program shown on the program guide or to select a television program on a channel. Examples of the input device 214 include a remote control, a keypad, a microphone, a touch screen, and the like.

Those programs that are likely to be watched by a user are deemed to be preferred programs, while those programs that are not likely to be watched by a viewer are deemed to be non-preferred programs. The invention operates to reduce the amount of memory used to store program guide information pertaining to non-preferred programs such that program guide information pertaining to more programs may be stored, or that the program guide information associated with preferred programs may be increased in terms of program description and other parameters.

In one embodiment, program guide information comprises "basic program information" and "extended program information." Basic programming information includes channel, scheduling and programming information displayable on the program guide. Extended program information comprises additional information about the program accessible via the program guide.

The receiver 106 minimizes the amount of program guide information stored in the memory 204 for programs that are not of interest to the viewer by discarding or deleting some or all of the corresponding extended program guide information. By deleting this information, the memory 204 thus conserved may be utilized to increase the extended program guide information associated with preferred programming or increase the time-slice size for the stored program guide information. Additionally, the receiver 106 may use different levels of storing program information in the memory. For example, the receiver 106 may store some (or predetermined types) of extended program information for programs of different levels of interest.

FIG. 3 depicts exemplary program guide screen imagery. Specifically, the program guide screen imagery 300 of FIG. 3 may be generated by the receiver 106 for display upon the display device 108. The program guide imagery 300 depicts a table of various programs available at different channels 302₁, 302₂,..., 302ₙ (collectively channels 302). The programs are displayed for a predetermined time frame or schedule length, illustratively two hours. While the program guide 300 of FIG. 3 lists programs for nine channels, it will be appreciated that the program guide 300 may list any number of channels for different schedule times.

In one embodiment, the program guide 300 represents each program as a button accessible by a viewer. The viewer may use the input device 214, e.g., a remote control, to access the button via a cursor or highlight. If the viewer accesses the button, the program guide 300 may display additional information about a corresponding program. The additional information may comprise "extended information" such as description of an episode, actor names, director names, and the like.

FIG. 4 depicts an embodiment of a program guide database 220 stored in the memory 204 of the receiver 106. In one embodiment, the program guide database 220 comprises a plurality of records 402₁, 402₂, 402₃, 402₄, 402₅, ..., 402ₙ (generally referred to herein as records 402). Each record 402 comprises channel information, schedule information and program information for a particular program. Each record 402 comprises basic programming information 404 and, optionally, extended programming information 406. Multiple entries 402 of a program may exist in the database 220 if a program is listed multiple times in the program schedule.

In one embodiment, the basic programming information 404 comprises any channel, scheduling and programming information displayable on the program guide 300. For example, the basic program information 404 may comprise the channel showing the program, the start time of the program on the channel, the end time of the program on the channel, and the title of the program. The extended program information 406 comprises additional information about the program. For example, the extended program information 406 may comprise a description of the program, names of actors in the program and the name of the director of the program.

The program guide database 220 may also comprise other types of basic program information 404 and extended program information 406 depicted in FIG. 4. Another example of basic program information may include a rating of a program, or a type or classification of the program. Common types of programs include sports, drama, comedy, news, and the like. Exemplary forms of extended program information 406 may also include a review of the program or a description of the program in a different language.

It will be appreciated by those skilled in the art that the program guide database 220 may be formed using a plurality of objects, where each of the records 402 comprises a record object having associated with it a basic programming information object and, optionally, an extended programming information object. The various objects forming the database 220 may be interrelated. Moreover, each program object may be modified to avoid the use of an associated extended programming information object. Optionally, the extended programming information object may itself be modified to reduce the amount of data contained therein.

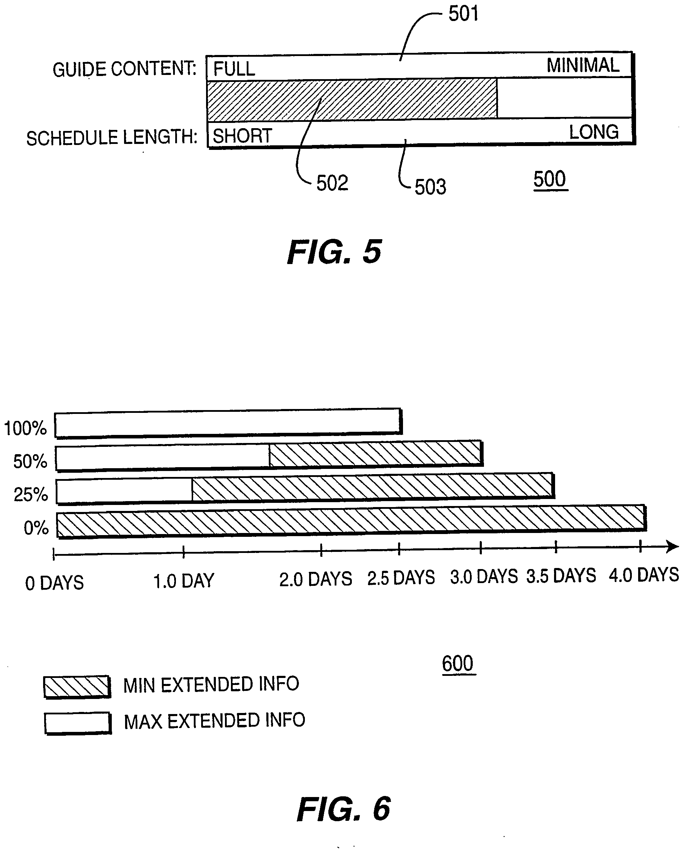

FIG. 5 depicts user interface imagery for controlling a quantity of program guide content in a program guide. The interface 500 enables viewer adjustment of memory utilization associated with program guide storage. Specifically, the interface 500 comprises a manipulable graphical object comprising first graphical imagery 501 associated with a quantity of guide content to be stored in, for example, memory 204, second graphical imagery 503 associated with schedule length of the program guide information stored within memory 204 and cursor graphical imagery 502 associated with a relationship between first 501 and second 503 regions. In operation, a user interacts with a set top terminal to adjust the cursor position to represent any one of a plurality of adjustments between the left and right portions of the cursor region 502. Adjusted fully to the left, the memory 204 stores full guide content and short schedule length. Adjusted fully to the right, the memory 204 stores minimal guide content and long schedule length. Full guide content comprises the maximum amount of extended program guide information for each of the programs presented via the program guide. Minimal guide content comprises only the basic program information. Settings in between result in more or less of the extended program guide information being stored. The schedule length is shortened or lengthened based upon the amount of memory 204 available given the selected level of guide content "richness" desired by the user.

If the cursor 502 is moved to the left side of the interface 500, the memory 504 stores the full program guide content, i.e., the maximum amount of extended program information, at the expense of storing program guide information over a short schedule length. In this mode, the receiver 106 discards program guide information scheduled outside the (short) schedule length but will add additional information for programs within the schedule length.

Similarly, if the cursor 502 is moved to the right side of the interface, the memory 504 stores minimal program guide content, i.e., only basic program information without any extended program information, over a long schedule length. In this mode, the receiver 106 discards extended program information for any current and future programs over the (long) schedule length of the program schedule. All program guide information outside the schedule length is discarded.

In addition, the cursor 502 is adjustable to enable the storage of different levels of program guide content in the memory 204. Generally, the amount of program guide content (per program) is inversely related to the schedule length. For example, the memory 204 may store a medium amount of program guide content. In one embodiment, the memory 204 may store the full program guide content for earlier programs in the program schedule, e.g., within a threshold period of time, and store minimal program guide content for later programs in the program schedule.

The above described user manipulable object of a cursor which may be used to represent the relative levels of program guide information and program guide scheduling may be replaced using other user manipulable objects. For example, rather than a cursor, the user manipulable object may comprise a slide bar, a dial, a pie chart, a gauge or any other visual object capable of adapting or visually biasing a percentage or relative level between a program guide information level and a program guide schedule length. Other modifications will be apparent to those skilled in the art informed by the teachings of the present invention.

FIG. 6 depicts different schedule lengths of a program guide based on the storage of extended program information. It can be seen that the schedule length of the program guide is shortest when the maximum amount of program guide information is stored in the memory 204 (i.e., 100%). The maximum amount of program guide information comprises basic program information and all the extended program information for each program in the program guide.

The schedule length increases as the amount of extended program information stored in the memory 204 decreases. Illustratively, the schedule length decreases from three days to two and a half days as extended program information is stored for a smaller percentage of the programs (100% to 50%).

Further decreases in the amount of program guide content stored in the memory 204 will increase the schedule length of the program guide 300. For example, if extended program information is decreased to only twenty five percent of the programs stored, the schedule length increases to 3.5 days. If no extended program information is stored for any of the programs (i.e., minimal program content), the schedule length increases to a maximum of four days. The above percentages as associated with the number of days comprising the schedule length are exemplary only. The actual amount of memory, and the amount of memory required to store basic and extended data, will define the number of days or schedule length.

In one embodiment, programs in the earlier portion of the program schedule store extended program information and programs in the later portion of the program schedule store no extended program information.

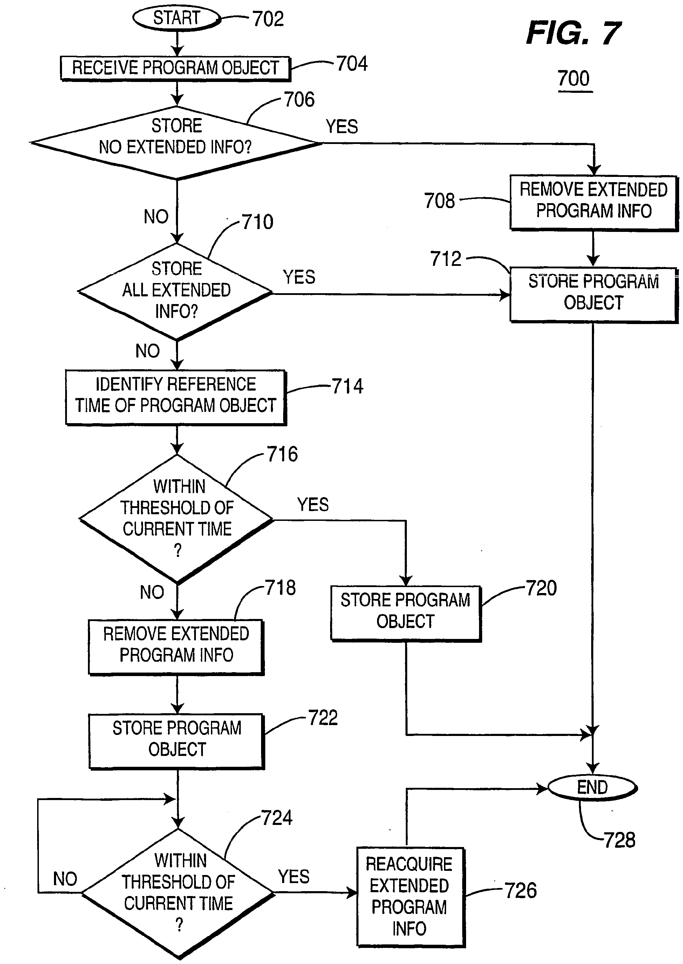

FIG. 7 depicts a flow diagram of a method 700 for allocating the memory 204 in the receiver 106. The method 700 modifies the amount of programming guide information to store for each program based on a scheduled length by a user. The user input is provided via user manipulation of a graphical object, such as depicted in FIG. 5. The user input may determine the outcome of any of steps 706, 710, 716 and 724. Specifically, the method 700 starts at step 702 and proceeds to step 704 where a program object is received. The received program object stores both basic program information and extended program information for a program.

At step 706, a query determines whether the memory 204 is configured to store no extended program information for each program. If the memory 204 is configured to store no extended program information for each program, then at step 708, the extended program information is removed from the received object, and at step 712 the program object is stored. The method then exits at step 728. If the memory 204 is configured to store extended program information, then at step 710 a query determines whether the memory 204 is configured to store all (i.e., a maximum amount) of extended program information for each program. If all the information is to be stored, then at step 712 the program object is stored and the method exits at step 728.

If the memory 204 is not configured to store all the extended program information, then the method 700 proceeds to step 714. In this case, the memory 204 is configured to retain the extended program information of some program objects and remove the extended program information of other program objects. At step 714, a reference time of the program object is identified. The reference time may comprise a start time of a program in the program schedule.

At step 716, a query determines whether the reference time of the program object is within a threshold period of the current time. That is, at step 716 a determination is made as to whether the program is scheduled in a sufficiently early portion of the program schedule as defined by the reference time.

If the reference time is within the threshold period of the current time, then at step 720 the program object is stored in the memory 204 without the removal of extended program information, and the method 700 exits at step 728. If the reference time is not within the threshold period of the current time, then at step 718 the extended program guide information is removed from the program object, and at step 722 the program object is stored.

At step 724 a query determines whether the reference time is within the threshold period of the current time. That is, step 724 determines whether the program has become part of the early portion of the program schedule (due to the passage of time). Step 724 repeats until the reference time is within the threshold period of the current time.

When the reference time is within the threshold period of the current time, at step 726 the extended program information is reacquired for the program and the method exits at step 728. In one embodiment, step 726 includes the transmitting a request to a source of program information (such as satellite 104), and receiving the requested program information containing extended program information.

Although various embodiments which incorporate the teachings of the present invention have been shown and described in detail herein, those skilled in the art can readily devise many other varied embodiments that will still incorporate these teachings.

## Claims

1. A method for storing program guide information for a plurality of programs in a receiver, said method comprising:
determining (710) a program guide information level in response to user interaction with a graphical object (500) indicative of said program guide information level;
determining (706-710), in response to said program guide information level, a program guide schedule length; and
storing (712) program guide data according to said program guide information level and said program guide schedule length (600), wherein said program guide schedule length (600) represents a time interval covered by said stored program guide data and program guide data not included according to said program guide information level is discarded and not stored.

2. The method of claim 1, wherein said graphical object comprises one of a cursor, a slide bar, a dial and a pie chart.

3. The method of claim 1, wherein said schedule length is increased if said program guide information level is decreased (600).

4. The method of claim 1, wherein said schedule length is decreased if said program guide information level is increased (600).

5. The method of claim 1, wherein said program guide information comprises basic program information (404) and extended program information (406).

6. The method of claim 5, wherein said program guide information level is defined as a percentage of program guide schedule length containing extended program information.

7. The method of claim 5, wherein said extended program information provides information regarding at least one of a program description, an actor, a director and a production note for a corresponding program.

8. The method of claim 1, wherein at least one of said plurality of programs is broadcast from one of a satellite and a terrestrial broadcasting center.

9. The method of claim 1, wherein each of said plurality of programs comprises at least one of a pre-recorded program, a live broadcast, and an advertisement.

10. The method of claim 1, wherein said program guide information comprises Advanced Program Guide (APG) information.

11. The method of claim 1, wherein said program schedule comprises an earlier portion and a later portion.

12. The method of claim 11 further comprising:
identifying (714) a reference time of a program object received for a program, where said program object comprises basic program information and extended program information for said a program; and
removing (718) extended program information from said program object if said identified reference time is in said later portion of said program schedule; wherein,
said program object is stored as at least a portion of said program guide data.

13. An apparatus for providing program guide information for each of a plurality of channels, said apparatus comprising:
a tuner (206), for tuning a signal including program guide information;
a demodulator (208) for demodulating said tuned signal to extract therefrom program guide information;
a memory (204) for storing said extracted program guide information and instructions (216); and
a processor (202), for executing said instructions and performing thereby the following steps:
determining (710) a program guide information level in response to user interaction with a graphical object (500) indicative of said program guide information level;
determining (706-710), in response to said program guide information level, a program guide schedule length; and
storing (712) program guide data in said memory according to said program guide information level and said program guide schedule length (600), wherein said program guide schedule length (600) represents a time interval covered by said stored program guide data and program guide data not included according to said program guide information level is discarded and not stored.

14. The apparatus of claim 13, wherein said graphical object comprises one of a cursor, a slide bar, a dial and a pie object.

15. The apparatus of claim 13, wherein said schedule length is increased if said level of program guide information is decreased (600).

16. The apparatus of claim 13, wherein said schedule length is decreased if said level of program guide information is increased (600).

17. The apparatus of claim 13, wherein said program guide information comprises basic program information (404) and extended program information (406).

18. The apparatus of claim 17 wherein said level of program guide information comprises a percentage of said program schedule containing extended program information.

19. The apparatus of claim 13 wherein said program guide information comprises Advanced Program Guide (APG) information.

## Patentansprüche

1. Verfahren zum Speichern von Programmführerinformationen für mehrere Programme in einem Empfänger, wobei das Verfahren umfasst:
Bestimmen (710) eines Programmführer-Informationsgrades in Reaktion auf eine Anwenderinteraktion mit einem graphischen Objekt (500), das den Programmführer-Informationsgrad angibt;
Bestimmen (706 - 710) einer Programmführer-Listenlänge in Reaktion auf den Programmführer-Informationsgrad; und Speichern (712) von Programmführerdaten in Übereinstimmung mit dem Programmführer-Informationsgrad und der Programmführer-Listenlänge (600), wobei die Programmführer-Listenlänge (600) ein von den gespeicherten Programmführerdaten umfasstes Zeitintervall repräsentiert und Programmführerdaten, die in Übereinstimmung mit dem Programmführer-Informationsgrad nicht enthalten sind, verworfen und nicht gespeichert werden.

2. Verfahren nach Anspruch 1, bei dem das graphische Objekt einen Cursor oder einen Schieberegler oder eine Skala oder ein Kreisdiagramm umfasst.

3. Verfahren nach Anspruch 1, bei dem die Listenlänge erhöht wird, falls der Programmführer-Informationsgrad verringert wird (600).

4. Verfahren nach Anspruch 1, bei dem die Listenlänge verringert wird, falls der Programmführer-Informationsgrad erhöht wird (600).

5. Verfahren nach Anspruch 1, bei dem die Programmführerinformationen Grund-Programminformationen (404) und erweiterte Programminformationen (406) umfassen.

6. Verfahren nach Anspruch 5, bei dem der Programmführer-Informationsgrad als ein Prozentsatz der Programmführer-Leistenlänge, der erweiterte Programminformationen enthält, definiert ist.

7. Verfahren nach Anspruch 5, bei dem die erweiterten Programminformationen Informationen hinsichtlich einer Programmbeschreibung und/oder eines Schauspielers und/oder eines Regisseurs und/oder eines Produktionshinweises für ein entsprechendes Programm bereitstellen.

8. Verfahren nach Anspruch 1, bei dem mindestens eines der mehreren Programme von einem Satelliten oder von einem terrestrischen Sendezentrum gesendet wird.

9. Verfahren nach Anspruch 1, bei dem jedes der mehreren Programme ein im Voraus aufgezeichnetes Programm und/oder eine Live-Sendung und/oder eine Werbung umfasst.

10. Verfahren nach Anspruch 1, bei dem die Programmführerinformationen Advanced-Program-Guide-Informationen (APG-Informationen) umfassen.

11. Verfahren nach Anspruch 1, bei dem die Programmliste einen früheren Abschnitt und einen späteren Abschnitt umfasst.

12. Verfahren nach Anspruch 11, das ferner umfasst:
Identifizieren (714) einer Referenzzeit eines für ein Programm empfangenen Programmobjekts, wobei das Programmobjekt Grund-Programminformationen und erweiterte Programminformationen für das Programm umfasst; und
Entfernen (718) erweiterter Programminformationen von dem Programmobjekt, falls die identifizierte Referenzzeit in dem späteren Abschnitt des Programmplans liegt; wobei das Programmobjekt mindestens als ein Abschnitt der Programmführerdaten gespeichert wird.

13. Vorrichtung zum Bereitstellen von Programmführerinformationen für jeden von mehreren Kanälen, wobei die Vorrichtung umfasst:
einen Tuner (206) zum Abstimmen eines Signals, das Programmführerinformationen enthält;
einen Demodulator (208) zum Demodulierten des abgestimmten signals zum Auskoppeln von Programmführerinformationen daraus;
einen Speicher (204) zum Speichern der ausgekoppelten Programmführerinformationen und von Anweisungen (216); und
einen Prozessor (202) zum Ausführen der Anweisungen und dabei zum Ausführen der folgenden Schritte:
Bestimmen (710) eines Programmführerinformationsgrades in Reaktion auf eine Nutzerinteraktion mit einem graphischen Objekt (500), das den Programmführer-Informationsgrad angibt;
Bestimmen (706-710) einer Programmführer-Listenlänge in Reaktion auf den Programmführer-Informationsgrad; und
Speichern (712) von Programmführerdaten in dem Speicher in Übereinstimmung mit dem Programmführer-Informationsgrad und mit der Programmführer-Listenlänge (600), wobei die Programmführer-Listenlänge (600) ein von den gespeicherten Programmführerdaten umfasstes Zeitintervall repräsentiert und wobei Programmführerdaten, die in Übereinstimmung mit dem Programmführer-Informationsgrad nicht enthalten sind, verworfen und nicht gespeichert werden.

14. Vorrichtung nach Anspruch 13, bei der das graphische Objekt einen Cursor oder einen Schieberegler oder eine Skala oder ein Kreisdiagramm umfasst.

15. Vorrichtung nach Anspruch 13, bei der die Listenlänge erhöht wird, falls der Grad der Programmführerinformationen verringert wird (600).

16. Vorrichtung nach Anspruch 13, bei der die Listenlänge verringert wird, falls der Grad der Programmführerinformationen erhöht wird (600).

17. Vorrichtung nach Anspruch 13, bei der die Programmführerinformationen Grund-Programminformationen (404) und erweiterte Programminformationen (406) umfassen.

18. Vorrichtung nach Anspruch 17, bei der der Programmführer-Informationsgrad einen Prozentsatz der Programmführer-Listenlänge, der erweiterte Programminformationen enthält, umfasst.

19. Vorrichtung nach Anspruch 13, bei der die Programmführerinformationen Advanced-Program-Guide-Informationen (APG-Informationen) umfassen.

## Revendications

1. Un procédé de stockage d'informations du guide des programmes pour une pluralité de programmes dans un récepteur, ledit procédé incluant :
la détermination (710) d'un niveau d'informations du guide des programmes en réponse à l'interaction de l'utilisateur avec un indicatif d'objet graphique (500) dudit niveau d'information du guide des programmes ;
la détermination (706-710), en réponse audit niveau d'information du guide des programmes, de la longueur de la planification du guide des programmes ; et
le stockage (712) des données du guide des programmes selon ledit niveau d'information du guide des programmes et ladite longueur de la planification du guide des programmes (600), où ladite longueur de la planification du guide des programmes (600) représente un intervalle de temps couvert par lesdites données du guide des programmes stockées et les données du guide des programmes non incluses selon ledit niveau d'information du guide des programmes sont éliminées et ne sont pas stockées.

2. Procédé selon la revendication 1, où ledit objet graphique comprend un curseur, une barre glissante, un numéroteur et un graphique circulaire.

3. Procédé selon la revendication 1, où ladite longueur de la planification est augmentée si ledit niveau d'information du guide des programmes est diminué (600).

4. Procédé selon la revendication 1, où ladite longueur de la planification est diminuée si ledit niveau d'information du guide des programmes est augmenté (600).

5. Procédé selon la revendication 1, où lesdites informations du guide des programmes contiennent des informations de programme de base (404) et des informations de programme étendues (406).

6. Procédé selon la revendication 5, où ledit niveau d'information du guide des programmes est défini sous la forme d'un pourcentage de la longueur de la planification du guide des programmes contenant les informations du programme étendues.

7. Procédé selon la revendication 5, où lesdites informations du programme étendues fournissent des informations concernant au moins une description du programme, un acteur, un réalisateur et une note de production pour le programme correspondant.

8. Procédé selon la revendication 1, où au moins un programme de ladite pluralité des programmes est émis par l'un des centres de diffusion terrestre et par satellite.

9. Procédé selon la revendication 1, où chaque programme de ladite pluralité des programmes comprend au moins un programme pré-enregistré, une émission en direct et une publicité.

10. Procédé selon la revendication 1, où lesdites informations du guide des programmes comprennent des informations du guide des programmes avancé.

11. Procédé selon la revendication 1, où ladite planification du programme comprend à la fois une partie antérieure et une partie postérieure.

12. Procédé selon la revendication 11, comprenant en outre :
l'identification (714) du temps de référence d'un objet de programme reçu pour un programme, où ledit objet du programme comprend des informations du programme de base et des informations du programme étendues pour ledit programme ; et
le retrait (718) des informations du programme étendues dudit objet de programme, si ledit temps de référence identifié est inclus dans ladite partie antérieure de ladite planification de programme ; où ledit objet de programme est stocké au moins comme une partie desdites données du guide des programmes.

13. Un appareil pour fournir des informations du guide des programmes pour chaque canal de la pluralité des canaux, ledit appareil comprenant :
un syntoniseur (206), pour le réglage du signal incluant les informations du guide des programmes ;
un démodulateur (208) pour démoduler ledit signal syntonisé dans le but d'en extraire les informations du guide des programmes ;
une mémoire (204) pour stocker lesdites informations du guide des programmes extraites et les instructions (216) ; et
un processeur (202), pour l'exécution desdites instructions et la réalisation des étapes suivantes :
la détermination (710) d'un niveau d'informations du guide des programmes en réponse à l'interaction de l'utilisateur avec un indicatif d'objet graphique (500) dudit niveau d'information du guide des programmes ;
la détermination (706-710), en réponse audit niveau d'information du guide des programmes, de la longueur de la planification du guide des programmes ; et
le stockage (712) des données du guide des programmes dans ladite mémoire selon ledit niveau d'information du guide des programmes et ladite longueur de la planification du guide des programmes (600), où ladite longueur de la planification du guide des programmes (600) représente un intervalle de temps couvert par lesdites données du guide des programmes stockées et les données du guide des programmes non incluses selon ledit niveau d'information du guide des programmes sont éliminées et ne sont pas stockées.

14. Appareil selon la revendication 13, où ledit objet graphique comprend un curseur, une barre glissante, un numéroteur et un graphique circulaire.

15. Appareil selon la revendication 13, où ladite longueur de la planification est augmentée si ledit niveau d'information du guide des programmes est diminué (600).

16. Appareil selon la revendication 13, où ladite longueur de la planification est diminuée si ledit niveau d'information du guide des programmes est augmenté (600).

17. Appareil selon la revendication 13, où lesdites informations du guide des programmes contiennent des informations de programme de base (404) et des informations de programme étendues (406).

18. Appareil selon la revendication 17 où ledit niveau d'information du guide des programmes contient un pourcentage de ladite planification des programmes contenant des informations du programme étendues.

19. Appareil selon la revendication 13, où lesdites informations du guide des programmes comprennent des informations du guide des programmes avancé.
